# EUROPÄISCHE PATENTSCHRIFT

(11) **EP 3 056 881 B1**
(45) Veröffentlichungstag und Bekanntmachung des Hinweises auf die Patenterteilung: **14.12.2016**
(21) Anmeldenummer: 15196655.3
(22) Anmeldetag: 27.11.2015
(51) Int. Cl.: G01J 5/08, G01J 5/02, G01J 5/04, G01J 5/00, G08B 13/19

(54) **PASSIV-INFRAROT-BEWEGUNGSMELDER**
PASSIVE INFRARED MOTION DETECTOR
DETECTEUR DE MOUVEMENT A INFRAROUGE PASSIF

(30) Priorität: 09.02.2015 DE 102015101783
(43) Veröffentlichungstag der Anmeldung: 17.08.2016
(73) Patentinhaber: Insta Elektro GmbH, 58509 Lüdenscheid (DE)
(72) Erfinder: Voigtländer, Andreas, 58509 Lüdenscheid (DE)

(56) Entgegenhaltungen:
- EP-A1- 1 122 699
- DE-A1- 19 821 302
- DE-A1-102012 109 131
- DE-U1-202009 017 072
- US-A1- 2013 044 444
- US-A1- 2014 084 165
- US-A1- 2014 300 735

## Beschreibung

Die vorliegende Erfindung geht von einem gemäß Oberbegriff des Hauptanspruches konzipierten Passiv-Infrarot-Bewegungsmelder aus.

Derartige Passiv-Infrarot-Bewegungsmelder sind in der Regel dafür vorgesehen, innerhalb und/oder außerhalb von Gebäuden auf automatische Art und Weise Aktoren beziehungsweise Verbraucher, wie zum Beispiel eine zugeordnete Beleuchtungseinrichtung, Jalousien, Gebäudeheizungen und so weiter bedarfsgerecht zu beeinflussen. Viele solcher Passiv-Infrarot-Bewegungsmelder weisen jedoch einen aufwendigen, vergleichsweise hohe Kosten verursachenden Aufbau auf, um bedarfsgerecht einen großen Erfassungsbereich abzudecken. Oftmals sind derartige Bewegungsmelder Bestandteil eines elektrischen/elektronischen Installationsgerätes, welches an das Installationssystem eines Gebäudes angeschlossen ist. Dabei ist der Bewegungsmelder oftmals als Aufsatz ausgeführt, der mit einem an das Installationssystem des Gebäudes angeschlossenen Einsatz in Verbindung gebracht wird. Zur Verbindung von Aufsatz und Einsatz sind dabei sowohl mechanische Verbindungselemente, als auch elektrische Steckanordnungen vorgesehen.

Durch die US 2014/0084165 A1 ist ein dem Oberbegriff des Hauptanspruches entsprechender Passiv-Infrarot-Bewegungsmelder bekannt geworden. Ein solcher Passiv-Infrarot-Bewegungsmelder besteht im Wesentlichen aus einem Sockelteil, welches zur Aufnahme einer Leiterplattenanordnung vorgesehen ist, welche mit mehreren Sensorelementen einer Sensoranordnung und weiteren, zur Funktion notwendigen Bauteilen bestückt ist und wobei zur Abdeckung am Sockelteil eine, mehrere Linsensegmente aufweisende Linsenkappe festgelegt ist. Die Leiterplattenanordnung besteht aus einer Hauptleiterplatte, bestückt mit zur Funktion notwendigen Bauteilen und einer, mit einem Sensorelement der Sensoranordnung bestückten, zumindest bereichsweise flexibel ausgeführten und mit der Hauptleiterplatte in Verbindung stehenden, Sensorleiterplatte.

Zudem ist durch die DE 10 2013 106 852 A1 ein Passiv-Infrarot-Bewegungsmelder bekannt geworden. Ein solcher Passiv-Infrarot-Bewegungsmelder besteht im Wesentlichen aus einem Sockelteil, welches zur Aufnahme einer Leiterplattenanordnung vorgesehen ist, welche mit mehreren Sensorelementen einer Sensoranordnung und weiteren, zur Funktion notwendigen Bauteilen bestückt ist, wobei zur Abdeckung am Sockelteil eine, mehrere Linsensegmente aufweisende Linsenkappe festgelegt ist. Der Passiv-Infrarot-Bewegungsmelder ist als Aufsatz ausgeführt, welcher über einen Steckverbinder an einen, an das Installationssystem eines Gebäudes angeschlossenen Einsatz angekoppelt werden kann.

Außerdem ist durch die US 2014/0300735 A1 ein Passiv-Infrarot-Bewegungsmelder bekannt geworden, welche eine Hauptleiterplatte aufweist, die über eine flexible Verbindung mit einer Sensorleiterplatten in Verbindung steht.

Zudem ist es durch die DE 20 2009 017 072 U1 vorbekannt, eine aus mehreren Leiterplatten bestehende Hauptleiterplattenanordnung mit einer Sensorleiterplatte zu verbinden, wobei die Hauptleiterplattenanordnung zur Herstellung von elektrischen Verbindungen mit zumindest einer Steckverbinderanordnung ausgerüstet ist.

Des Weiteren ist durch die DE 10 2012 109 131 A1 eine flexible Leiterplatte bekannt geworden, welche gefaltet werden kann, um den darauf befindlichen optoelektrischen Bauelementen eine beliebige Ausrichtung zu ermöglichen.

Außerdem ist durch die EP 1 122 699 A1 ein Multifunktionsmodul eines Passiv-Infrarot-Bewegungsmelders bekannt geworden, welches aus zwei Hauptkomponenten aufgebaut ist, nämlich einer ersten Komponente aus einem galvanisierbaren Kunststoff und einer zweiten Komponente aus einem nicht galvanisierbaren, elektrisch isolierendem Kunststoff, wobei die erste Komponente in Verbindung mit mindestens einer aufgebrachten Metallschicht zur Bildung mindestens eines Spiegels sowie zur Bildung von integrierten Leiterbahnen und integrierten Anschlussaugen für den Anschluss diskreter elektrischer/elektronischer Bauelemente sowie Sensoren dient und die zweite Komponente den mechanisch robusten Aufbau und die elektrische Isolierung des Multifunktionsmoduls gewährleistet. Ein solches Multifunktionsmodul weist vier unflexibel ausgeführte Platten auf.

Zudem ist durch die DE 198 21 302 A1 ein Passiv-Infrarot-Bewegungsmelder bekannt geworden. Um eine Gerätefamilie zu schaffen, die durch wahlweise Bestückung mit Infrarotdetektoren und Spiegeln anforderungsspezifische Ausbaustufen ermöglicht, wird eine Hauptleiterplatte vorgesehen, die mit einem Multifunktionsmodul verbunden ist, das aus einem Kunststoffhalter mit darin eingesteckten Detektorleiterplatten besteht, und mit aufsteckbaren Spiegelanordnungen ergänzbar ist. Die Detektorleiterplatten sind unflexibel ausgeführt.

Des Weiteren ist durch die US 2013/0044444 A1 eine photoelektrische Steuervorrichtung mit einem Gehäuse bekannt geworden. Im Inneren des Gehäuses sind mindestens zwei Leiterplatten angeordnet. Die Leiterplatten sind mit einem Fotosensor und einer Kommunikationsschaltung ausgerüstet.

Ausgehend von solchen Passiv-Infrarot-Bewegungsmeldern liegt der vorliegenden Erfindung die Aufgabe zugrunde, einen Passiv-Infrarot-Bewegungsmelder zu schaffen, welcher bei einfachem und kostengünstigem Aufbau eine hohe Funktionszuverlässigkeit bietet.

Erfindungsgemäß wird diese Aufgabe durch die im Hauptanspruch angegebenen Merkmale gelöst.

Bei einer solchen Ausbildung ist besonders vorteilhaft, dass bei vergleichsweise kompaktem Aufbau ein großer Erfassungsbereich bei sicherem Erkennungsverhalten abgedeckt wird. Außerdem ist besonders vorteilhaft, dass die Ausrichtung der Sensorelemente zwangsweise beziehungsweise automatisch erst beim Montageprozess erfolgt, was sowohl die Herstellung als auch die Montage auf besonders kostengünstige Art und Weise ermöglicht, weil durchgängig maschinelle Lötverfahren eingesetzt werden können. Weiterhin ist besonders vorteilhaft, dass bei einer derartigen Ausführung auf einfache Art und Weise eine Integration in ein bereits bestehendes Geräteprogramm erfolgen kann, wobei auch eine Integration in bereits bestehende Designlinien formschön auf einfache Art und Weise möglich ist.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert. Dabei zeigen:

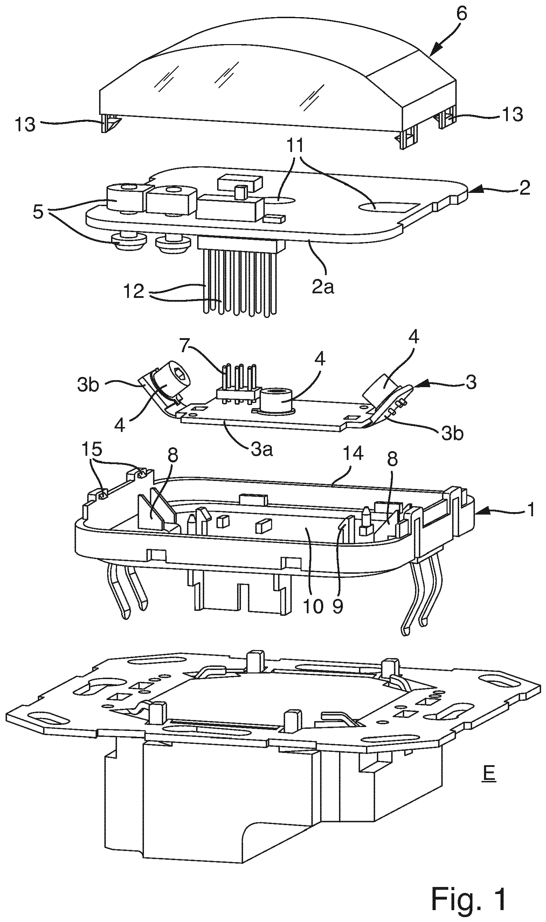

- Fig. 1:: prinziphaft eine Explosionsdarstellung eines aus Aufsatz und Einsatz bestehenden Bewegungsmelders, in räumlicher Darstellung;

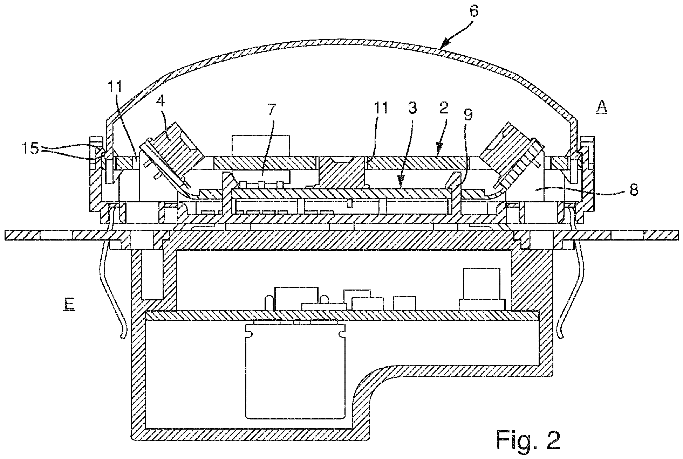

- Fig. 2:: prinziphaft einen Zusammenbau eines gemäß Figur 1 ausgeführten Bewegungsmelders, im Vollschnitt.

Wie aus den Zeichnungen hervorgeht, besteht ein solcher Passiv-Infrarot-Bewegungsmelder hauptsächlich aus einem Sockelteil 1, welches zur Aufnahme einer Leiterplattenanordnung 2,3 vorgesehen ist, die mit mehreren Sensorelementen 4 einer Sensoranordnung und weiteren, zur Funktion notwendigen Bauteilen 5 bestückt ist. Zur Abdeckung ist am Sockelteil 1 eine, mehrere Linsensegmente aufweisende Linsenkappe 6 festgelegt. Die Leiterplattenanordnung 2,3 besteht aus einer, mit funktionsnotwendigen Bauteilen 5 bestückten Hauptleiterplatte 2 und einer, mit drei Sensorelementen 4 bestückten Sensorleiterplatte 3. Beim vorliegenden Ausführungsbeispiel weist die Sensoranordnung also drei Sensorelementen 4 auf. Um auf einfache Art und Weise eine zur Funktion notwendige elektrische Verbindung zwischen der Hauptleiterplatte 2 und der Sensorleiterplatte 3 zu schaffen, ist eine Steckverbinderanordnung 7 vorgesehen.

Um erst durch den Montageprozess des Bewegungsmelders auf einfache Art und Weise eine exakte Ausrichtung der Sensorelemente 4 automatisch beziehungsweise zwangsweise zu bewirken, besteht die Sensorleiterplatte 3 aus einem unflexiblen Hauptbereich 3a und zwei flexibel angebundenen Nebenbereichen 3b. Außerdem weist zu diesem Zweck das Sockelteil 1 zwei Lagerböcke 8 auf, welche durch den Montageprozess die beiden flexiblen Nebenbereiche 3b der Sensorleiterplatte 3 mit ihrem jeweils einen Sensorelement 4 zwangsweise in die, zur bedarfsgerechten Funktion notwendige Ausrichtung bringen. Bei der Montage kommen dazu die unteren Flächen der beiden flexibel angeordneten Nebenbereiche 3b auf den zugeordneten Kopfflächen der zugehörigen Lagerböcke 8 zur Anlage. Die Kopfflächen der beiden Lagerböcke 8 weisen jeweils die, zur exakten Ausrichtung der Sensorelemente 4 notwendige Neigung auf. Durch das Fortschreiten des Montageprozesses werden die beiden flexibel angebundenen Nebenbereiche 3b mehr und mehr in die zur Funktion notwendige Ausrichtung gebracht, wodurch auch die beiden zugehörigen Sensorelemente 4 letztendlich in die, zur Funktion notwendige Ausrichtung gebracht werden. Dieser Ausrichtungsprozess erfolgt, bis die Sensorleiterplatte 3 durch zwei erste Befestigungselemente 9 positionsgenau am Sockelteil 1 festgelegt ist. Die beiden ersten Befestigungselemente 9 sind jeweils als Rasthaken ausgeführt und einstückig an den Boden 10 des Sockelteiles 1 angeformt. Zur Festlegung kommen die ersten Befestigungselemente 9 mit entsprechend ausgeführten Rastkonturen des Hauptbereiches 3a der Sensorleiterplatte 3 haltend in Verbindung. Nachdem die Sensorleiterplatte 3 am Sockelteil 1 festgelegt ist, wird die Hauptleiterplatte 2 montiert und zwar dergestalt, dass an der Hauptleiterplatte 2 zunächst die Linsenkappe 6 befestigt wird. Dies geschieht über zweite Befestigungselemente 13, die ebenfalls als Rasthaken ausgeführt sind und mit entsprechenden Rastkonturen der Hauptleiterplatte 2 in Wirkverbindung kommen. Dann wird die Hauptleiterplatte 2 zusammen mit der Linsenkappe 6 am Sockelteil 1 festgelegt, so dass die Sensorleiterplatte 3 unterhalb der dem Boden 10 des Sockelteiles 1 zugewandten Unterseite 2a der Hauptleiterplatte 2 angeordnet ist. Die Sensorleiterplatte 3 ist also zwischen dem Boden 10 des Sockelteiles 1 und der Unterseite 2a der Hauptleiterplatte 2 angeordnet. Die Hauptleiterplatte 2 weist zum Durchtritt der drei Sensorelemente 4 der Sensoranordnung drei Ausnehmungen 11 auf. Nach Abschluss des Montageprozesses der Hauptleiterplatte 2 ragen die drei Sensorelemente 4 jeweils durch eine dieser Ausnehmungen 11 hindurch. Die Hauptleiterplatte 2 liegt nach dem Abschluss des Montageprozesses auf dem Randbereich 14 des Sockelteiles 1 auf wobei gleichzeitig an die Linsenkappe 6 und an das Sockelteil 1 angeformte Rastelemente 15 rastend miteinander in Wirkverbindung kommen, womit die Hauptleiterplatte 2 letztendlich positionsgenau am Sockelteil 1 festgelegt ist.

Wie bereits erwähnt, ist jedem der beiden Nebenbereichen 3b, als auch dem Hauptbereich 3a der Sensorleiterplatte 3, jeweils ein Sensorelement 4 zugeordnet. Das auf dem Hauptbereich 3a befindliche Sensorelement 4 weist, bezogen auf die Hauptfläche des Hauptbereiches 3a, eine parallele Ausrichtung auf. Die beiden auf den Nebenbereichen 3b angeordneten Sensorelemente 4 sind, bezogen auf die Hauptfläche des Hauptbereiches 3a, um einen Winkel von ca. 55 Grad angestellt, wobei die Anstellung in Richtung Linsenkappe 6 erfolgt. Durch die Anordnung und Ausrichtung der drei Sensorelementen 4 im Zusammenspiel mit der am Sockelteil 1 festgelegten Linsenkappe 6 wird bei vergleichsweise kompaktem Aufbau ein großer Erfassungsbereich bei sicherem Erkennungsverhalten abgedeckt. Weil die Sensorleiterplatte 3 vor dem Montageprozess eine gestreckte Form aufweist, das bedeutet, die beiden Nebenbereich 3b befinden sich in einer Erstreckungsebene mit dem Hauptbereich 3a, können die auf der Sensorleiterplatte 3 vorhandenen Sensorelemente 4 und sonstigen Bauteile kostengünstig auf besonders einfache Art und Weise maschinell verlötet (schwallgelötet) werden.

Die Hauptleiterplatte 2 ist mit zehn, zu einer Steckeranordnung zusammengefassten Steckerstiften 12 versehen, die durch den Boden 10 des Sockelteiles 1 nach außen geführt sind. Die Steckeranordnung mit ihren zehn Steckerstiften 12 ist dafür vorgesehen, dass der als Aufsatz A ausgeführte Bewegungsmelder auf einfache Art und Weise an einen zur Funktion notwendigen Einsatz E angekoppelt werden kann, welcher seinerseits an ein Installationssystem eines Gebäudes angeschlossen ist. Die Gesamtanordnung des Bewegungsmelders stellt somit ein elektrisches/elektronisches Installationsgerät der Gebäudesystemtechnik dar, welches aus einem Aufsatz A und einen Einsatz E besteht.

### Bezugszeichenliste:

- 1: Sockelteil
- 2: Hauptleiterplatte
- 2a: Unterseite
- 3: Sensorleiterplatte
- 3a: Hauptbereich
- 3b: Nebenbereiche
- 4: Sensorelemente
- 5: Bauteile
- 6: Linsenkappe
- 7: Steckverbinderanordnung
- 8: Lagerböcke
- 9: Erste Befestigungselemente
- 10: Boden
- 11: Ausnehmungen
- 12: Steckerstifte
- 13: Zweite Befestigungselemente
- 14: Randbereich
- 15: Rastelemente

- A: Aufsatz
- E: Einsatz

## Patentansprüche

1. Passiv-Infrarot-Bewegungsmelder mit einem Sockelteil, welches zur Aufnahme einer Leiterplattenanordnung vorgesehen ist, welche mit mehreren Sensorelementen einer Sensoranordnung und weiteren, zur Funktion notwendigen Bauteilen bestückt ist, und wobei zur Abdeckung am Sockelteil eine, mehrere Linsensegmente aufweisende Linsenkappe festgelegt ist, wobei die Leiterplattenanordnung (2, 3) aus einer, mit zur Funktion notwendigen Bauteilen (5) bestückten Hauptleiterplatte ( 2) und zumindest einer, mit zumindest einem Sensorelement (4) der Sensoranordnung bestückten, zumindest bereichsweise flexibel ausgeführten und mit der Hauptleiterplatte (2) in Verbindung stehenden, Sensorleiterplatte (3) besteht, **dadurch gekennzeichnet, dass** die Sensorleiterplatte (3) aus einem unflexiblen Hauptbereich (3a) und zwei flexibel angebundenen Nebenbereichen (3b) besteht, und dass das Sockelteil (1) zwei Lagerböcke (8) aufweist, welche durch den Montageprozess die beiden flexiblen Nebenbereiche (3b) der Sensorleiterplatte (3) mit ihrem jeweils einen Sensorelement (4) zwangsweise in die, zur bedarfsgerechten Funktion notwendige Ausrichtung bringen, und dass bei der Montage dazu die unteren Flächen der beiden flexibel angeordneten Nebenbereiche (3b) auf den zugeordneten Kopfflächen der zugehörigen Lagerböcke (8) zur Anlage kommen, und dass die Kopfflächen der beiden Lagerböcke (8) jeweils die, zur exakten Ausrichtung der Sensorelemente (4) notwendige Neigung aufweisen.

2. Passiv-Infrarot-Bewegungsmelder nach Anspruch 1, **dadurch gekennzeichnet, dass** zur Verbindung der Hauptleiterplatte (2) mit der Sensorleiterplatte (3) eine Steckverbinderanordnung (7) vorgesehen ist.

3. Passiv-Infrarot-Bewegungsmelder nach einem der Ansprüche 1 oder 2, **dadurch gekennzeichnet, dass** das Sockelteil (1) erste Befestigungselemente (9) zur Festlegung der Sensorleiterplatte (3) aufweist.

4. Passiv-Infrarot-Bewegungsmelder nach einem der Ansprüche 1 bis 3, **dadurch gekennzeichnet, dass** die Sensorleiterplatte (3) unterhalb der dem Boden (10) des Sockelteiles (1) zugewandten Unterseite (2a) der Hauptleiterplatte (2) angeordnet ist.

5. Passiv-Infrarot-Bewegungsmelder nach einem der Ansprüche 1 bis 4, **dadurch gekennzeichnet, dass** die Hauptleiterplatte (2) zum Durchtritt von Sensorelementen (4) der Sensoranordnung zumindest eine Ausnehmung (11) aufweist.

6. Passiv-Infrarot-Bewegungsmelder nach einem der Ansprüche 1 bis 5, **dadurch gekennzeichnet, dass** die Hauptleiterplatte (2) mit mehreren, zu einer Steckeranordnung zusammengefassten Steckerstiften (12) versehen ist, die durch den Boden (10) des Sockelteiles (1) nach außen geführt sind.

7. Passiv-Infrarot-Bewegungsmelder nach einem der Ansprüche 1 bis 6, **dadurch gekennzeichnet, dass** der Bewegungsmelder als Aufsatz (A) eines, aus Aufsatz (A) und Einsatz (E) bestehenden elektrischen/elektronischen Installationsgerätes ausgeführt ist, und dass der Einsatz (E) zum Anschluss an ein Installationssystem eines Gebäudes vorgesehen ist.

## Claims

1. Passive-infrared motion detector with a base part provided to take up a PCB unit which is equipped with several sensor elements of a sensor unit and further modules necessary for the function, and wherein a lens cap with several lens elements is affixed to the base part for covering purposes, wherein the PCB unit (2, 3) consists of a main PCB (2) equipped with modules (5) necessary for the function and at least one sensor PCB, equipped with at least one sensor element (4) of the sensor unit, at least partially flexibly designed and connected with the main PCB (2), **characterized by** the fact that the sensor PCB (3) consists of an inflexible main sector (3a) and two flexibly connected secondary sectors (3b), and that the base part (1) provides two bearing supports (8) which, due to the mounting process compulsorily take the two flexible secondary sectors (3b) of the sensor PCB (3) with their one sensor element (4) each into the required direction needed for the function, and that to this effect during mounting the lower surfaces of the two flexibly arranged secondary sectors (3b) are supported on the assigned head surfaces of the pertaining bearing supports (8), and that the head surfaces of the two bearing supports (8) respectively provide the inclination required for exact adjustment of the sensor elements (4).

2. Passive-infrared motion detector in accordance with Claim 1, **characterized by** the fact that for connection of the main PCB (2) with the sensor PCB (3) a plug connector unit (7) is provided.

3. Passive-infrared motion detector in accordance with any of Claims 1 or 2, **characterized by** the fact that the base part (1) provides first fastening elements (9) to fasten the sensor PCB (3).

4. Passive-infrared motion detector in accordance with any of Claims 1 to 3, **characterized by** the fact that the sensor PCB (3) is arranged beneath the lower side (2a) of the main PCB (2) facing the bottom (10) of the base part (1).

5. Passive-infrared motion detector in accordance with any of Claims 1 to 4, **characterized by** the fact that the main PCB (2) provides at least one opening (11) to feed through the sensor elements (4) of the sensor unit.

6. Passive-infrared motion detector in accordance with any of Claims 1 to 5, **characterized by** the fact that the main PCB (2) is provided with several plug pins (12) combined to one plugging unit, which are lead to the outside through the bottom (10) of the base part (1).

7. Passive-infrared motion detector in accordance with any of Claims 1 to 6, **characterized by** the fact that the motion detector is designed as top part (A) of an electric/electronic installation device consisting of top part (A) and insert (E) and that the insert (E) is provided for connection to a building installation system.

## Revendications

1. Détecteur de mouvement infrarouge passif avec un élément socle prévu pour accueillir un système de carte à circuits imprimés, lequel est équipé de plusieurs éléments capteurs d'un système de capteurs et d'autres éléments nécessaires au fonctionnement, un cache à lentille présentant plusieurs segments de lentille étant fixé pour le recouvrement sur l'élément socle, le système de carte à circuits imprimés (2,3) se composant d'une carte à circuits imprimés principale (2) équipée des éléments nécessaires au fonctionnement (5) et d'au moins une carte à circuits imprimés à capteurs (3) équipée d'au moins un élément capteur (4) du système de capteurs, de modèle flexible au moins dans certaines parties et reliée à la carte à circuits imprimés principale (2), **caractérisé en ce que** la carte à circuits imprimés à capteurs (3) se compose d'une partie principale (3a) non flexible et de deux parties secondaires (3b) reliées de manière flexible, et **en ce que** l'élément socle (1) présente deux paliers supports (8), lesquels, de par le processus de montage, contraignent les deux parties secondaires flexibles (3b) de la carte à circuits imprimés à capteurs (3), avec leur élément capteur (4) respectif, à l'orientation et la position nécessaire pour un fonctionnement répondant aux besoins, et **en ce que**, lors du montage, les surfaces inférieures des deux parties secondaires (3b) agencées de manière flexible s'appuient pour cela sur les surfaces de tête des paliers supports (8) correspondants, et **en ce que** les surfaces de tête des deux paliers supports (8) présentent respectivement l'inclinaison nécessaire pour une orientation exacte des éléments capteurs (4).

2. Détecteur de mouvement infrarouge passif selon la revendication 1, **caractérisé en ce que** un système enfichable (7) est prévu pour la connexion de la carte à circuits imprimés principale (2) à la carte à circuits imprimés à capteurs (3).

3. Détecteur de mouvement infrarouge passif selon l'une des revendications 1 ou 2, **caractérisé en ce que** l'élément socle (1) présente de premiers éléments de fixation (9) permettant la fixation de la carte à circuits imprimés à capteurs (3).

4. Détecteur de mouvement infrarouge passif selon l'une des revendications 1 à 3, **caractérisé en ce que** la carte à circuits imprimés à capteurs (3) est placée au-dessous du dessous (2a) de la carte à circuits imprimés principale (2) tourné vers le fond (10) de l'élément socle (1).

5. Détecteur de mouvement infrarouge passif selon l'une des revendications 1 à 4, **caractérisé en ce que** la carte à circuits imprimés principale (2) présente au moins un évidement (11) permettant le passage d'éléments capteurs (4) du système de capteurs

6. Détecteur de mouvement infrarouge passif selon l'une des revendications 1 à 5, **caractérisé en ce que** la carte à circuits imprimés principale (2) est munie de plusieurs fiches (12) réunies dans un système de prise, traversant le fond (10) de l'élément socle (1) vers l'extérieur.

7. Détecteur de mouvement infrarouge passif selon l'une des revendications 1 à 6, **caractérisé en ce que** le détecteur de mouvement est réalisé sous forme d'élément rapporté supérieur (A) d'un appareil d'installation électrique/électronique constitué d'un élément rapporté supérieur (A) et d'un élément intérieur (E), et **en ce que** l'élément intérieur (E) est prévu pour le branchement à un système d'installation d'un bâtiment.
